# EUROPEAN PATENT SPECIFICATION

(11) **EP 3 627 495 B1**
(45) Date of publication and mention of the grant of the patent: **10.08.2022**
(21) Application number: 18802511.8
(22) Date of filing: 01.02.2018
(51) Int. Cl.: G10L 13/02, G10L 19/00, H04N 21/439, G01C 21/36

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 16.05.2017 JP 2017096999
(43) Date of publication of application: 25.03.2020
(73) Proprietor: Sony Group Corporation, Tokyo 108-0075 (JP)
(72) Inventor: TAKI, Yuhei, Tokyo 108-0075 (JP); IWASE, Hiro, Tokyo 108-0075 (JP); SAITO, Mari, Tokyo 108-0075 (JP); KAWANO, Shinichi, Tokyo 108-0075 (JP)
(74) Representative: MFG Patentanwälte Meyer-Wildhagen Meggle-Freund Gerhard PartG mbB
(86) International application number: PCT/JP2018/003458
(87) International publication number: WO 2018/211748

(56) References cited:
- WO-A1-2009/141853
- JP-A- 2005 003 795
- JP-A- 2006 047 237
- JP-A- 2006 047 237
- JP-A- 2009 055 620
- JP-A- 2011 043 710
- US-A1- 2015 363 155

## Description

### Technical Field

The present disclosure relates to an information processing apparatus and an information processing method.

### Background Art

In recent years, various agent devices that issue information notifications or the like to users have been gaining widespread use. In addition, technology has been developed for improving the convenience and accuracy of information notifications issued by agent devices as described above. For example, PTL 1 discloses technology for selecting a line that fits in the time of the prelude or the like of a musical composition, and making a voice output for the line.

JP 2006 047237 A discloses a music data controller that finds an output time zone of a music introducing voice and a voice output time zone of navigation, in a music continuous replay/music introducing DJ mode, judges whether the time zones are overlapped or not, and controls the voice of the navigation to be output with priority.

US 2015/363155 A1 discloses an audio output control device that includes a control device that adjusts an output of earlier audio information and an output of later audio information in a situation where a request for outputting the later audio information is made before the output of the earlier audio information ends. The control device includes: a first acquisition device that acquires end time information of the earlier audio information; a second acquisition device that acquires delay permissible information of the later audio information; and a first determination device that determines whether a wait for outputting the later audio information is available, according to the end time information and the delay permissible information. When the wait is available, the control device outputs the later audio information after preferentially executing the output of the earlier audio information.

### Citation List

### Patent Literature

PTL 1: Japanese Unexamined Patent Application Publication No. 2004-62769

### Summary of the Invention

### Problem to be Solved by the Invention

However, information notifications issued by the agent devices have extremely diverse contents. It is difficult for the technology described in the PTL 1 to address, for example, a case where an information notification desired to be outputted is longer than a non-utterance section such as the time of a prelude. In addition, it is also conceivable to adjust the length of a spoken utterance for an information notification in accordance with a non-utterance section as described above. In this case, important information may be, however, lost because a portion of the contents of the notification is deleted.

Accordingly, the present disclosure proposes a novel and improved information processing apparatus and information processing method each of which more reliably allows a user to perceive the contents of an information notification issued through a spoken utterance even during the reproduction of content including an utterance, while maintaining the completeness of the information notification.

### Means for Solving the Problem

According to a first aspect, the present invention provides an information processing apparatus in accordance with independent claim 1. According to a second aspect, the present invention provides an information processing method in accordance with independent claim 13. Further aspects are set forth in the dependent claims, the drawings and the following description.

According to the present disclosure, there is provided an information processing apparatus including an output control unit that controls an output of a spoken utterance during reproduction of content including an utterance section. The output control unit extends a non-utterance section in the content, and causes the spoken utterance to be outputted during reproduction of the extended non-utterance section.

In addition, according to the present disclosure, there is provided an information processing method including controlling, by a processor, an output of a spoken utterance during reproduction of content including an utterance section. The controlling further includes extending a non-utterance section in the content, and causing the spoken utterance to be outputted during reproduction of the extended non-utterance section.

### Effects of the Invention

As described above, according to the present disclosure, it is possible to more reliably allow a user to perceive the contents of an information notification issued through a spoken utterance even during the reproduction of content including an utterance, while maintaining the completeness of the information notification.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram illustrating an example of a system configuration according to an embodiment of the present disclosure.
[FIG. 2] FIG. 2 is a diagram illustrating a use image of an information processing terminal and output control apparatus according to the embodiment.
[FIG. 3] FIG. 3 is an example of a functional block diagram of the information processing terminal according to the embodiment.
[FIG. 4] FIG. 4 is an example of a functional block diagram of the output control apparatus according to the embodiment.
[FIG. 5] FIG. 5 is an example of a functional block diagram of the information processing server according to the embodiment.
[FIG. 6] FIG. 6 is a diagram for describing output control of music content according to the embodiment.
[FIG. 7] FIG. 7 is a diagram for describing output control of video content according to the embodiment.
[FIG. 8] FIG. 8 is a diagram for describing output control of game content according to the embodiment.
[FIG. 9] FIG. 9 is a diagram for describing output control of audible content according to the embodiment.
[FIG. 10] FIG. 10 is a sequence diagram illustrating a flow of processing performed by an information processing system according to the embodiment.
[FIG. 11] FIG. 11 is a flowchart illustrating a flow of processing performed by the output control apparatus according to the embodiment.
[FIG. 12] FIG. 12 is a diagram illustrating an example of a hardware configuration according to an embodiment of the present disclosure.

### Modes for Carrying out the Invention

Hereinafter, (a) preferred embodiment(s) of the present disclosure is described in detail with reference to the appended drawings. It is to be noted that, in this specification and the appended drawings, components that have substantially the same function and configuration are denoted with the same reference numerals, thereby refraining from repeatedly describing these components.

Note that the description proceeds in the following order.
1. Embodiment
1.1. Background
1.2. System Configuration Example
1.3. Functional Configuration Example of Information Processing Terminal 10
1.4. Functional Configuration Example of Output Control Apparatus 20
1.5. Functional Configuration Example of Information Processing Server 30
1.6. Specific Example of Output Control
1.7. Flow of Processing
2. Example of Hardware Configuration
3. Summary

### <1. Embodiment>

### <<1.1. Background>>

As described above, various agent devices that issue information notifications or the like through spoken utterances have been gaining widespread use in recent years. In addition, agent devices as described above sometimes issue information notifications through spoken utterances during the reproduction of content including an utterance. Examples thereof include a case where an agent device issues an information notification for received mail during the reproduction of music content including a vocal, and the like.

However, in a case where the agent device then makes a spoken utterance that overlaps with the vocal in the music content being reproduced, a situation may occur in which the sounds of the vocal disturb and prevent a user from grasping the contents of the information notification.

Meanwhile, to avoid a situation as described above, it is also possible to make the spoken utterance for the information notification in a non-utterance section such as the prelude in the music content. However, in a case where the length of the spoken utterance exceeds the length of the non-utterance section, it is sometimes unavoidable that the spoken utterance and the utterance section overlap with each other.

In addition, in a case where the contents of an information notification are simplified to fit in the non-utterance section, there is a risk of important information being deleted. There is even a risk that the original intention of the information notification is lost. Further, to prevent the intention from being lost as described above, a complicated and inefficient operation has to be performed such as manually adjusting the length of a spoken utterance in accordance with the non-utterance section, while maintaining the intention of the information notification.

The technical idea according to the present disclosure has been conceived by focusing on the points described above, and more reliably enables a user to perceive the contents of an information notification issued through a spoken utterance even during the reproduction of content including an utterance even during the reproduction of content including an utterance, while maintaining the completeness of the information notification. To this end, one of the characteristics of the information processing apparatus and information processing method according to an embodiment of the present disclosure is to extend a non-utterance section of content including an utterance section, and cause a spoken utterance to be outputted during the reproduction of the extended non-utterance section when controlling the output of the spoken utterance during the reproduction of the content. In other words, the information processing apparatus and information processing method according to an embodiment of the present disclosure adjust the length of content in accordance with a spoken utterance for an information notification, thereby making it possible to perform control to prevent an utterance in the content and the spoken utterance for the information notification from overlapping with each other, while securing the completeness of the information notification. The above-described features of the information processing apparatus and information processing method according to an embodiment of the present disclosure make it possible to notify a user at timing at which complete information is easy for the user to hear, which allows the convenience of information notifications issued through spoken utterances to be further improved.

### <<1.2. System Configuration Example>>

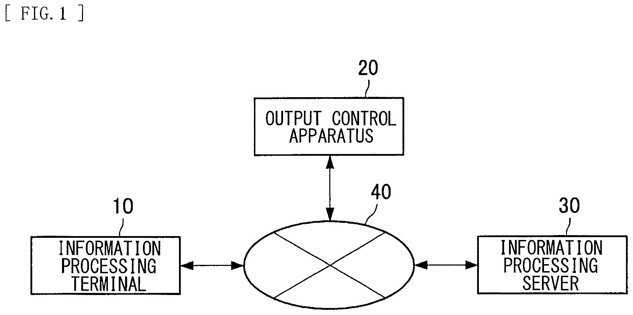

Next, a system configuration example according to the embodiment of the present disclosure is described. FIG. 1 is a diagram illustrating an example of the system configuration according to the present embodiment. FIG. 1 illustrates that an information processing system according to the present embodiment includes an information processing terminal 10, an output control apparatus 20, and an information processing server 30. In addition, the information processing terminal 10 and the output control apparatus 20 are coupled to each other via a network 40, and the output control apparatus 20 and the information processing server 30 are coupled to each other via the network 40, which allows the information processing terminal 10 and the output control apparatus 20 to communicate with each other and allows the output control apparatus 20 and the information processing server 30 to communicate with each other.

### (Information Processing Terminal 10)

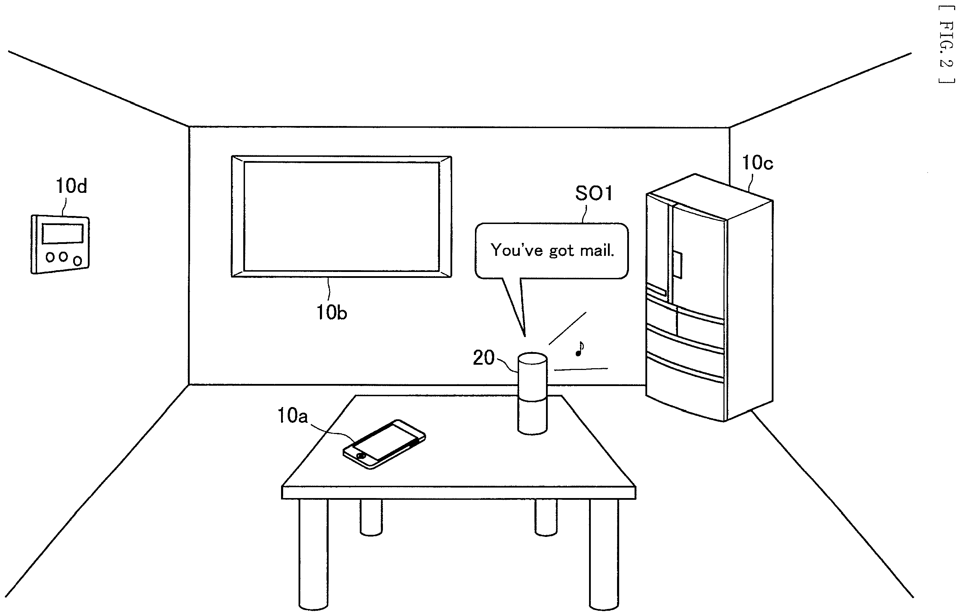

The information processing terminal 10 according to the present embodiment may include various apparatuses that generate notification information for a user notification. FIG. 2 is a diagram illustrating a use image of the information processing terminal 10 and output control apparatus 20 according to the present embodiment. FIG. 2 illustrates a plurality of types of information processing terminals 10a to 10d as examples of the information processing terminal 10 according to the present embodiment.

The information processing terminal 10a is a smartphone owned by a user. The information processing terminal 10a generates, for example, notification information regarding a received message, notification information regarding registered schedule, and the like, and transmits the generated notification information to the output control apparatus 20.

In addition, the information processing terminal 10b is a television receiver. For example, the information processing terminal 10b may generate notification information for a start of a program registered and scheduled to be viewed or listened to by a user, received urgent news, and the like, and transmit the generated notification information to the output control apparatus 20.

In addition, the information processing terminal 10c is a refrigerator. For example, the information processing terminal 10c may generate notification information indicating that the door is not completely closed, notification information regarding a piece of food close to the expiration date, and the like, and transmit the generated notification information to the output control apparatus 20.

In addition, the information processing terminal 10d is an operation panel of a water heater. For example, the information processing terminal 10d may generate notification information indicating that the bathtub has filled with hot water, notification information regarding various errors, and the like, and transmit the generated notification information to the output control apparatus 20.

As exemplified above, the information processing terminal 10 according to the present embodiment is defined as various apparatuses each having a function of generating notification information. In addition to the example illustrated in FIG. 1, the information processing terminal 10 according to the present embodiment may be, for example, a household appliance such as a game console, a recorder, an audio apparatus, a washing machine, or a lighting, or an office appliance.

### (Output Control Apparatus 20)

The output control apparatus 20 according to the present embodiment is an information processing apparatus that issues an information notification through a spoken utterance on the basis of notification information or the like received from the information processing terminal 10. One of the characteristics of the output control apparatus 20 according to the present embodiment is to extend a non-utterance section in content, and issue an information notification through a spoken utterance during the reproduction of the extended non-utterance section. In the case of the example illustrated in FIG. 2, the output control apparatus 20 is a stationary agent apparatus, and outputs a spoken utterance SO1 on the basis of notification information received from the information processing terminal 10a.

In addition, the output control apparatus 20 according to the present embodiment is not limited to the example described above. The output control apparatus 20 according to the present embodiment may be, for example, a smartphone, a tablet, a wearable apparatus, a computer, an autonomous agent, or the like. In addition, the output control apparatus 20 according to the present embodiment may also be implemented as a television receiver, an audio apparatus, a game console, or the like having a content reproduction function.

Note that the output control apparatus 20 according to the present embodiment is able to control, on the basis of respective pieces of notification information received from the plurality of information processing terminals 10, the output of the corresponding spoken utterance for each piece of notification information as illustrated in FIG. 2. The above-described function of the output control apparatus 20 according to the present embodiment makes it possible to unify information notifications issued by the plurality of information processing terminals 10, and concurrently issue an information notification in the reproduction place of content, namely, the place that is highly expected to have a user. This more reliably allows the user to be notified of information.

### (Information Processing Server 30)

The information processing server 30 according to the present embodiment is an information processing apparatus that holds content information regarding content to be reproduced. In addition, the information processing server 30 according to the present embodiment may have a function of synthesizing an artificial voice to be used for a spoken utterance.

### (Network 40)

The network 40 has functions of coupling the information processing terminal 10 and the output control apparatus 20 to each other, and coupling the output control apparatus 20 and the information processing server 30 to each other. The network 40 may include public networks such as the Internet, a telephone network, and a satellite communication network, and various LAN (Local Area Networks), WAN (Wide Area Networks), and the like including Ethernet (registered trademark). In addition, the network 40 may include leased line networks such as IP-VPN (Internet Protocol-Virtual Private Network). In addition, the network 40 may include wireless communication networks of Wi-Fi (registered trademark), Bluetooth (registered trademark), and the like.

The system configuration example of the information processing system according to the present embodiment has been described above. Note that the configuration described above with reference to FIGs. 1 and 2 is merely an example. The configuration of the information processing system according to the present embodiment is not limited to the example. For example, the functions of the information processing terminal 10 and the output control apparatus 20 may be implemented by a single apparatus. In addition, the information processing system according to the present embodiment does not necessarily have to include the information processing server 30. In this case, the output control apparatus 20 may have the function of synthesizing an artificial voice to be used for a spoken utterance. It is possible to flexibly modify the configuration of the information processing system according to the present embodiment in accordance with the specifications and operations.

### <<1.3. Functional Configuration Example of Information Processing Terminal 10»

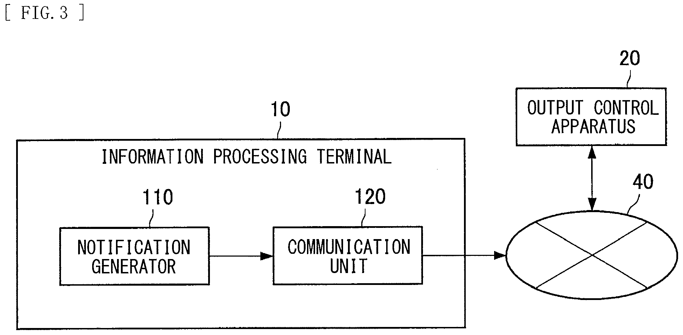

Next, a functional configuration example of the information processing terminal 10 according to the present embodiment is described. FIG. 3 is an example of a functional block diagram of the information processing terminal 10 according to the present embodiment. FIG. 3 illustrates that the information processing terminal 10 according to the present embodiment includes a notification generator 110 and a communication unit 120.

### (Notification Generator 110)

The notification generator 110 according to the present embodiment has a function of generating notification information for a user notification. As described above, the notification generator 110 according to the present embodiment is able to generate various kinds of notification information according to the characteristics of the information processing terminal 10.

### (Communication Unit 120)

The communication unit 120 according to the present embodiment has a function of performing information communication with the output control apparatus 20 via the network 40. Specifically, the communication unit 120 transmits notification information generated by the notification generator 110 to the output control apparatus 20.

The functional configuration example of the information processing terminal 10 according to the present embodiment has been described above. Note that the configuration described above with reference to FIG. 3 is merely an example. The functional configuration of the information processing terminal 10 according to the present embodiment is not limited to the example. The information processing terminal 10 according to the present embodiment may further include a component other than those illustrated in FIG. 3. For example, the information processing terminal 10 may further include, for example, a reproduction unit that reproduces content, and an input unit that receives an input operation of a user and the like. In addition, the information processing terminal 10 may include a processing unit that performs various kinds of processing according to the characteristics of the apparatus. It is possible to flexibly modify the configuration of the information processing terminal 10 according to the present embodiment in accordance with the specifications and operations.

### <<1.4. Functional Configuration Example of Output Control Apparatus 20»

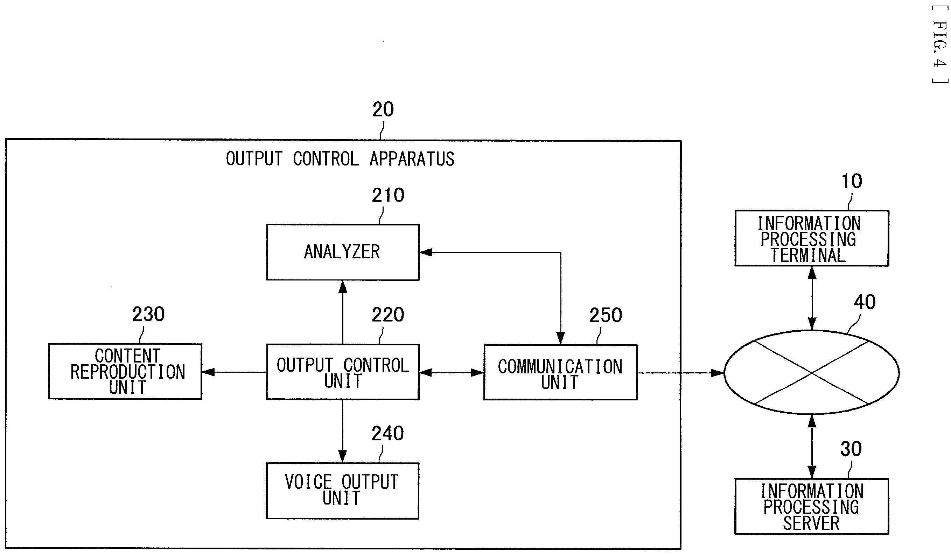

Next, a functional configuration example of the output control apparatus 20 according to the present embodiment is described. FIG. 4 is an example of a functional block diagram of the output control apparatus 20 according to the present embodiment. FIG. 4 illustrates that the output control apparatus 20 according to the present embodiment includes an analyzer 210, an output control unit 220, a content reproduction unit 230, a voice output unit 240, and a communication unit 250.

### (Analyzer 210)

The analyzer 210 according to the present embodiment has a function of analyzing information regarding an utterance section and a non-utterance section in content. The analyzer 210 is able to perform the analysis described above by using a technique based on amplitudes and zero crossings, a technique based on Gaussian mixture-distribution models, a decoder-based technique, or the like.

Here, the content according to the present embodiment may be, for example, music content, video content, game content, audible content, or the like. In addition, the utterance section described above refers to a section including a voice output in content, and the non-utterance section described above refers to a section including no voice output in content. Note that the voice described above refers to a voice emitted by the human, the system, or the like.

### (Output Control Unit 220)

The output control unit 220 according to the present embodiment has a function of controlling the output of a spoken utterance during the reproduction of content including an utterance section. In this case, one of the characteristics of the output control unit 220 according to the present embodiment is to extend a non-utterance section in the content, and cause the spoken utterance described above to be outputted during the reproduction of the extended non-utterance section.

More specifically, the output control unit 220 according to the present embodiment may extend a non-utterance section on the basis of the details of content. The output control unit 220 is able to extend a non-utterance section by using, for example, a portion of the reproduction information extracted from content or relevant information related to the details of content. Note that the output control unit 220 may determine, on the basis of the time it takes to output a spoken utterance, how long a non-utterance section is extended. The function of the output control unit 220 according to the present embodiment is separately described in detail below.

### (Content Reproduction Unit 230)

The content reproduction unit 230 according to the present embodiment has a function of reproducing content on the basis of the control performed by the output control unit 220. The content reproduction unit 230 according to the present embodiment is able to reproduce content in which a non-utterance section is extended, as described above. Note that the content reproduction unit 230 according to the present embodiment includes an output device according to the details of content. Various display devices, amplifiers, speakers, and the like are applied to the output device described above.

### (Voice Output Unit 240)

The voice output unit 240 according to the present embodiment has a function of outputting a voice for an information notification on the basis of the control performed by the output control unit 220. The voice output unit 240 according to the present embodiment then outputs a spoken utterance during the reproduction of an extended non-utterance section in content. Note that the voice output unit 240 is able to output the spoken utterance described above by using an artificial voice synthesized on the basis of notification information and relevant information relating to content. The voice output unit 240 includes output devices such as an amplifier and a speaker.

### (Communication Unit 250)

The communication unit 250 according to the present embodiment has a function of performing information communication with the information processing terminal 10 and the information processing server 30 via the network 40. Specifically, the communication unit 250 receives notification information from the information processing terminal 10. In addition, the communication unit 250 transmits, to the information processing server 30, requests for text information used for synthesizing an artificial voice and relevant information relating to content. In addition, the communication unit 250 receives the relevant information relating to content and the synthesized artificial voice from the information processing server 30.

The functional configuration example of the output control apparatus 20 according to the present embodiment has been described above. Note that the configuration described above with reference to FIG. 4 is merely an example. The functional configuration of the output control apparatus 20 according to the present embodiment is not limited to the example. A portion of the functions illustrated in FIG. 4 may also be implemented as a function of another apparatus different from the output control apparatus 20. For example, the content reproduction unit 230, the voice output unit 240, and the like described above may be included as functions of the information processing terminal 10 or another apparatus. Meanwhile, the output control apparatus 20 according to the present embodiment may also have a function of synthesizing an artificial voice, a function of interpreting the intention of an utterance made by a user or the like to generate a response sentence, or the like. It is possible to flexibly modify the configuration of the output control apparatus 20 according to the present embodiment in accordance with the specifications and operations.

### <<1.5. Functional Configuration Example of Information Processing Server 30>>

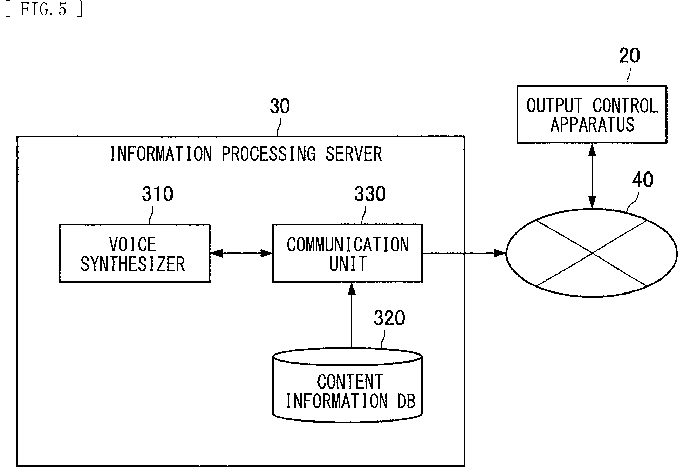

Next, a functional configuration example of the information processing server 30 according to the present embodiment is described. FIG. 5 is an example of a functional block diagram of the information processing server 30 according to the present embodiment. FIG. 5 illustrates that the information processing server 30 according to the present embodiment includes a voice synthesizer 310, a content information DB 320, and a communication unit 330.

### (Voice Synthesizer 310)

The voice synthesizer 310 according to the present embodiment has a function of synthesizing an artificial voice on the basis of text information or the like received from the output control apparatus 20. The artificial voice generated by the voice synthesizer 310 according to the present embodiment is transmitted to the output control apparatus 20 via the communication unit 330 and the network 40, and is outputted by the voice output unit 240.

### (Content Information DB 320)

The content information DB 320 according to the present embodiment is a database that holds relevant information related to content. Here, the relevant information according to the present embodiment may include basic information, additional information, and the like regarding content. For example, in a case where the content is music content, the relevant information may include the music name, the artist name, the release time, the ranking, a comment about the musical composition, a message, advertisement, and the like. In addition, the content information DB 320 according to the present embodiment may hold the content itself as data in addition to the relevant information.

### (Communication Unit 330)

The communication unit 330 has a function of performing information communication with the output control apparatus 20 via the network 40. Specifically, the communication unit 330 receives, from the output control apparatus 20, requests for text information used for synthesizing an artificial voice and relevant information relating to content. In addition, the communication unit 330 transmits the artificial voice synthesized by the voice synthesizer 310, the relevant information and content data held by the content information DB 320, and the like to the output control apparatus 20.

The functional configuration example of the information processing server 30 according to the present embodiment has been described above. Note that the configuration described above with reference to FIG. 5 is merely an example. The functional configuration of the information processing server 30 according to the present embodiment is not limited to the example. The information processing server 30 according to the present embodiment may further include a component other than those illustrated in FIG. 5. For example, the information processing server 30 may have a function or the like of interpreting the intention of an utterance made by a user or the like to generate a response sentence. In addition, as described above, the function of the voice synthesizer 310 may also be implemented as a function of the output control apparatus 20. It is possible to flexibly modify the configuration of the information processing server 30 according to the present embodiment in accordance with the specifications and operations.

### <<1.6. Specific Example of Output Control>>

Next, the output control performed by the output control apparatus 20 according to the present embodiment is described in detail with reference to a specific example.

### (Output Control over Music Content)

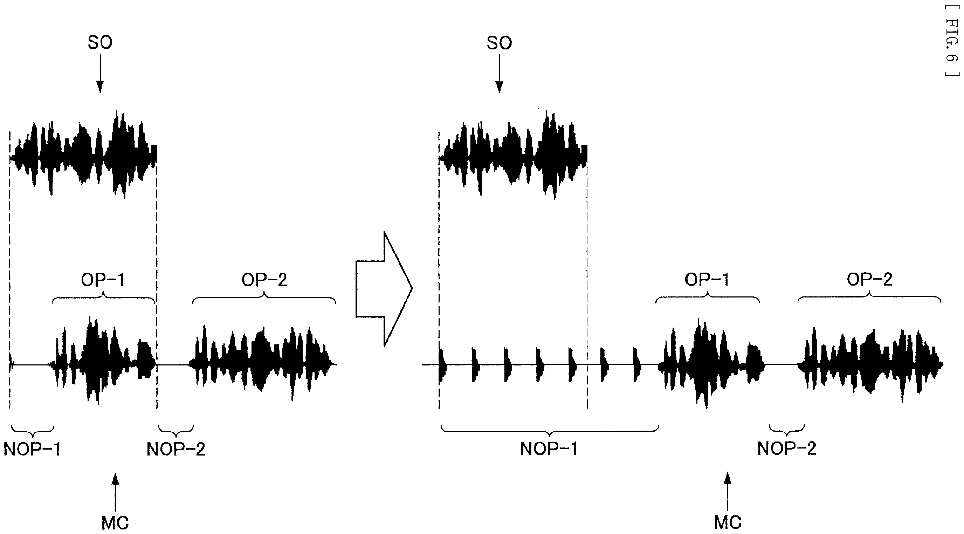

First, output control performed in a case where the content according to the present embodiment is music content is described. FIG. 6 is a diagram for describing the output control of music content according to the present embodiment. Here, the upper portion of FIG. 6 and the lower portion of FIG. 6 respectively visualize a spoken utterance SO outputted by the voice output unit 240 of the output control apparatus 20, and music content MC reproduced by the content reproduction unit 230.

Note that FIG. 6 illustrates an example of a case where the music content MC includes two utterance sections OP-1 and OP-2, and two non-utterance sections NOP-1 and NOP-2. The utterance sections OP-1 and OP-2 may be the vocal sections in the music content MC, namely, the sections in which a singing voice, rap music, a line, and the like are reproduced. In addition, the non-utterance sections NOP-1 and NOP-2 may be the sections corresponding to the prelude, the interlude, the postlude and the like in the music content MC.

The left portion of FIG. 6 illustrates an example in which music content is reproduced and a spoken utterance is outputted in a case where the output control apparatus 20 according to the present embodiment performs no control. In a case where the output control apparatus 20 according to the present embodiment performs no control, the spoken utterance SO is outputted each time without taking timing into consideration. In this case, as illustrated in the diagram, the spoken utterance SO is outputted overlapping with the utterance section OP-1 or the like of the music content MC. Competing with the voice output of the utterance section OP-1 makes the spoken utterance SO difficult for a user to perceive.

Meanwhile, the right portion of FIG. 6 illustrates an example in which music content is reproduced and a spoken utterance is outputted in a case where the output control apparatus 20 according to the present embodiment performs the extension control of a non-utterance section. Note that an example of a case is here illustrated where the output control unit 220 extends the non-utterance section NOP-1 on the basis of the time it takes to output the spoken utterance SO.

The output control unit 220 according to the present embodiment may then extend the non-utterance section NOP-1 by using the reproduction information relating to the non-utterance section NOP-1 extracted from the music content. In other words, the output control unit 220 according to the present embodiment is able to extend the non-utterance section NOP-1 by repeating the reproduction information corresponding to the prelude, the interlude, the postlude, or the like in the music content MC. For example, the output control unit 220 is able to extend the non-utterance section NOP-1 without making a strange impression by repeating the reproduction information described above for each bar.

In this way, the output control unit 220 according to the present embodiment extends a non-utterance section NOP in the music content MC in accordance with the spoken utterance SO, and causes the spoken utterance SO to be outputted in the non-utterance section, thereby making it possible to cause the spoken utterance SO to be outputted not to overlap with an utterance section OP, while maintaining the completeness of an information notification.

Note that the spoken utterance SO described above may be, for example, a spoken utterance based on various kinds of notification information received from the information processing terminal 10, or a spoken utterance based on relevant information related to the music content MC. On the basis of relevant information acquired from the information processing server 30, the output control unit 220 is able to cause the spoken utterance SO including, for example, the basic information, the additional information, and the like of the music content MC to be outputted.

More specifically, the output control unit 220 is able to cause the spoken utterance SO including the music name and artist name of the music content MC, a comment from the artist, advertisement, and the like to be outputted. The above-described function of the output control unit 220 makes it possible to implement, at low cost, for example, an automated radio station that extends the prelude of the music content MC and introduces a song of the music content MC in the extended prelude, a free music viewing and listening service that outputs advertisement in the extended prelude, and the like.

The output control of the music content according to the present embodiment has been described in detail above. Note that the above describes, as a main example, the case where the output control unit 220 extends the prelude in music content, but the output control unit 220 is also able to extend a non-utterance section such as the interlude or the postlude. In addition, the output control unit 220 is also able to acquire a plurality of spoken utterances on the basis of notification information or relevant information, distribute the plurality of spoken utterances into a plurality of non-utterance sections, and output the distributed spoken utterances.

### (Output Control over Video Content)

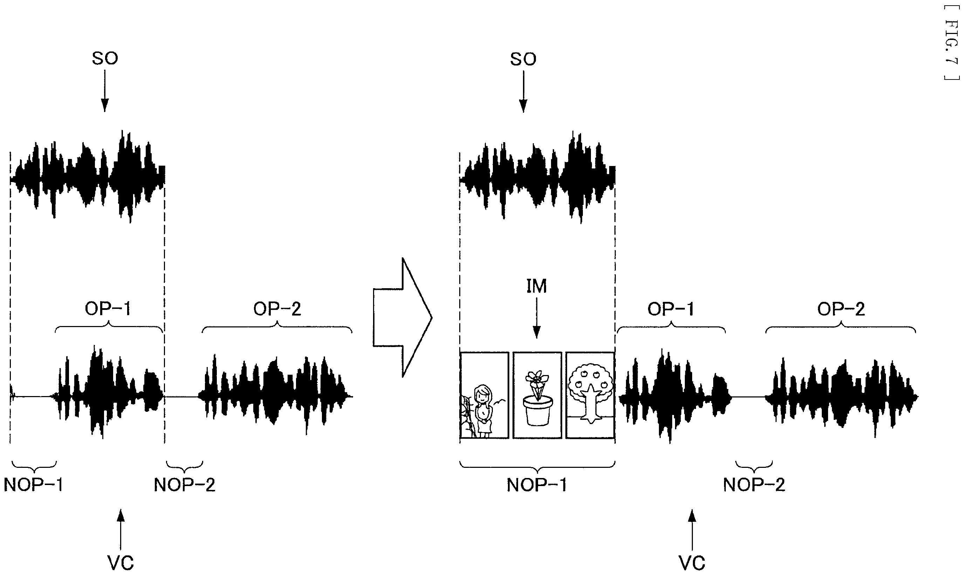

Next, output control performed in a case where the content according to the present embodiment is video content is described. FIG. 7 is a diagram for describing the output control of video content according to the present embodiment. Here, the upper portion of FIG. 7 and the lower portion of FIG. 6 respectively visualize a spoken utterance SO outputted by the voice output unit 240 of the output control apparatus 20, and sound information relating to video content VC reproduced by the content reproduction unit 230.

Similarly to FIG. 6, FIG. 7 illustrates an example of a case where the video content VC includes two utterance sections OP-1 and OP-2, and two non-utterance sections NOP-1 and NOP-2. The utterance sections OP-1 and OP-2 are sections in which a person, a character, and the like are making utterances in the video content VC. In addition, the non-utterance sections NOP-1 and NOP-2 are segments in which sounds other than the utterances are outputted in the video content VC or segments in which no sounds are outputted in the video content VC.

The left portion of FIG. 7 illustrates an example in which the video content VC is reproduced and the spoken utterance SO is outputted in a case where the output control apparatus 20 according to the present embodiment performs no control. In a case where the output control apparatus 20 according to the present embodiment performs no control, the spoken utterance SO is outputted each time without taking timing into consideration. In this case, as illustrated in the diagram, the spoken utterance SO is outputted overlapping with the utterance section OP-1 or the like of the video content VC. Competing with the voice output of the utterance section OP-1 makes the spoken utterance SO difficult for a user to perceive.

Meanwhile, the right portion of FIG. 7 illustrates an example in which the video content VC is reproduced and the spoken utterance SO is outputted in a case where the output control apparatus 20 according to the present embodiment performs the extension control of a non-utterance section.

The output control unit 220 according to the present embodiment may then extend the non-utterance section NOP-1 by using the reproduction information relating to the non-utterance section NOP-1 extracted from the video content VC. In other words, the output control unit 220 according to the present embodiment is able to extend the non-utterance section NOP-1 by using still images IM extracted from the video content VC. In this case, the output control unit 220 may extend the non-utterance section NOP-1, for example, to repeatedly reproduce one scene of the video content VC. Alternatively, the output control unit 220 is able to generate a digest image collection of the video content VC to extend the non-utterance section NOP-1.

Meanwhile, the output control unit 220 may also extend the non-utterance section NOP-1 by using the still images IM related to the details of the video content VC. The output control unit 220 is able to perform the control described above by acquiring the still images IM related to the video content VC from the information processing server 30. Here, the still images IM related to the video content VC may include, for example, an image of an appearing actor, advertisement of a product tied up therewith, and the like. In addition, in a case where the video content VC is a moving image or the like shot by an individual, photographs or the like related to the moving image may be used as the still images IM. Specifically, in a case where the video content VC is stored in an image management application or the like, the output control unit 220 may use the still images IM stored in the same folder as that of the video content VC, or may use the still images IM shot at almost the same shooting date and time as that of the video content or shot in the same place as that of the video content.

In this way, the output control unit 220 according to the present embodiment extends a non-utterance section NOP in the video content VC in accordance with the spoken utterance SO, and causes the spoken utterance SO to be outputted in the non-utterance section, thereby making it possible to cause the spoken utterance SO to be outputted not to overlap with an utterance section OP, while maintaining the completeness of an information notification.

Note that the spoken utterance SO described above may be, for example, a spoken utterance based on various kinds of notification information received from the information processing terminal 10, or a spoken utterance based on relevant information related to the video content VC. On the basis of relevant information acquired from the information processing server 30, the output control unit 220 may cause the spoken utterance SO including, for example, the basic information, the additional information, and the like of the video content VC to be outputted. Specifically, the output control unit 220 may cause a comment added to the video content VC, or information such as the shooting place, the date and time, and the weather at the time of shooting to be outputted as the spoken utterance SO. The above-described function of the output control unit 220 makes it possible to automatically generate an album or the like with narration. The album includes the video content VC and the still images IM relevant thereto.

In addition, the output control unit 220 may also translate, for example, a line or the like read aloud in the video content VC, and cause it to be outputted as the spoken utterance SO. Further, the output control unit 220 is also able to cause, for example, the supplemental information in the video content VC to be outputted as the spoken utterance SO. The supplemental information described above includes, for example, commentary on and narration for the video content VC. The above-described function of the output control unit 220 makes it possible to supplement visual information with the spoken utterance SO, which allows, for example, even a visually impaired user to be precisely informed of the details of the video content VC.

### (Output Control over Game Content)

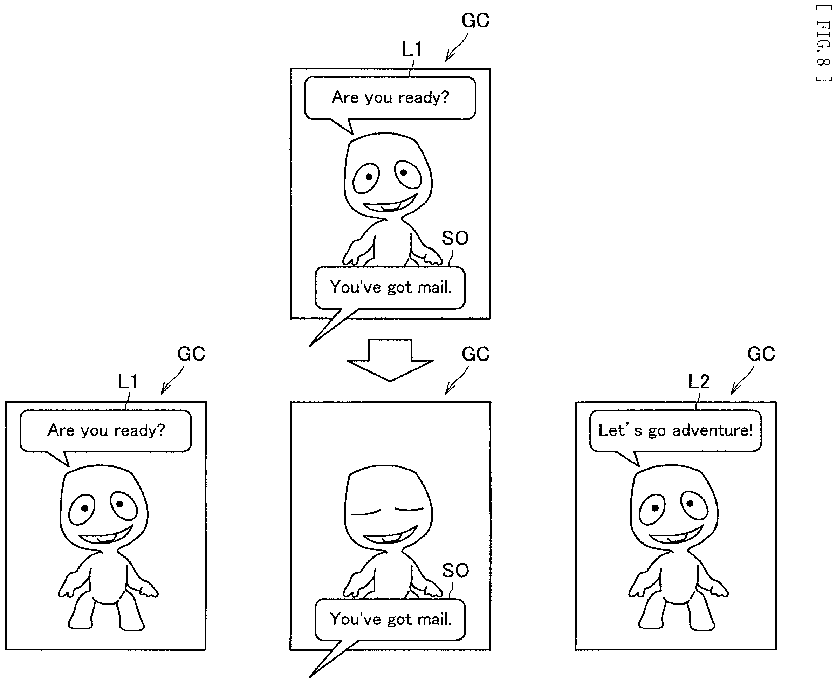

Next, output control performed in a case where the content according to the present embodiment is game content is described. FIG. 8 is a diagram for describing the output control of game content according to the present embodiment. The upper portion of FIG. 8 illustrates an example in which game content GC is reproduced and a spoken utterance SO is outputted in a case where the output control apparatus 20 according to the present embodiment performs no control. In a case where the output control apparatus 20 according to the present embodiment performs no control, the spoken utterance SO is outputted each time without taking timing into consideration. In this case, as illustrated in the diagram, the spoken utterance SO is outputted overlapping with a line L1 of a character or the like that is, in other words, an utterance section in the game content GC. This makes it difficult for a user to perceive the spoken utterance SO.

Meanwhile, the lower portion of FIG. 8 illustrates an example in which the game content GC is reproduced and the spoken utterance SO is outputted in a case where the output control apparatus 20 according to the present embodiment performs the extension control of a non-utterance section.

The output control unit 220 according to the present embodiment may then extend a non-utterance section by bringing an action or the like of a character in the game content GC into an idling state. The idling state described above refers to a state in which the progress state in the game content GC is temporarily stopped while the reproduction of a moving image, background music, or the like is maintained. In the case of the example illustrated in FIG. 8, the output control unit 220 temporarily stops the progress state of the game content GC while maintaining a natural action of a character such as blinking. The output control unit 220 thereby extends a non-utterance section and causes the spoken utterance SO to be outputted. In addition, the output control unit 220 may release the idling state described above after the output of the spoken utterance SO is completed. In the case of the example illustrated in FIG. 8, the idling state is released by the output control unit 220, which causes the game content GC to proceed and causes the character to read a line L2. The above-described function of the output control unit 220 according to the present embodiment makes it possible to cause the spoken utterance SO to be more naturally outputted with no strange impression without completely stopping the game content VC.

### (Output Control over Audible Content)

Next, output control performed in a case where the content according to the present embodiment is audible content is described. The audible content according to the present embodiment is content in which text information is read aloud. For example, it is possible to audibly read a book such as a novel.

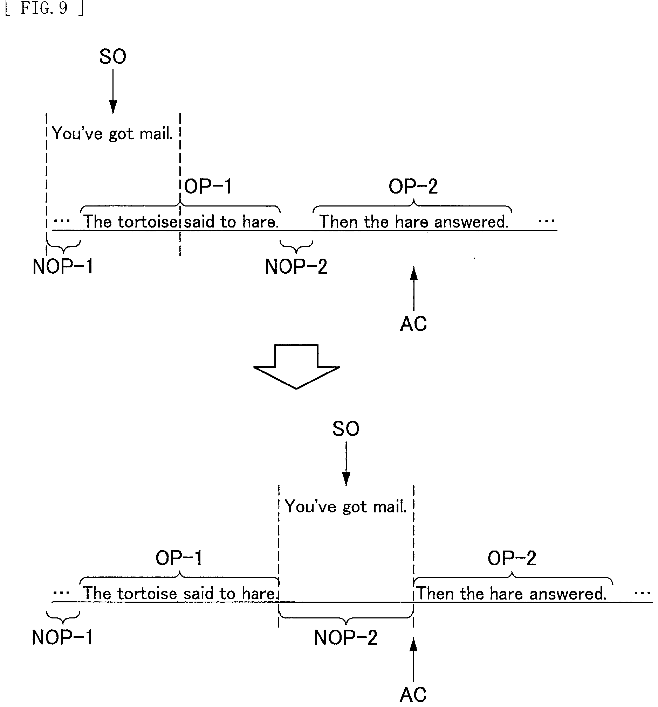

FIG. 9 is a diagram for describing the output control of the audible content according to the present embodiment. FIG. 9 illustrates an example of a case where audible content AC includes two utterance sections OP-1 and OP-2, and two non-utterance sections NOP-1 and NOP-2. The utterance sections OP-1 and OP-2 are sections in which text information is read aloud in the audible content AC. In addition, the non-utterance sections NOP-1 and NOP-2 are sections in which nothing is read aloud in the audible content AC. The non-utterance sections NOP-1 and NOP-2 include, for example, a section between utterance sections or a section in which only background sounds are outputted.

The upper portion of FIG. 9 illustrates now an example in which the audible content AC is reproduced and a spoken utterance SO is outputted in a case where the output control apparatus 20 according to the present embodiment performs no control. In a case where the output control apparatus 20 according to the present embodiment performs no control, the spoken utterance SO is outputted each time without taking timing into consideration. In this case, as illustrated in the diagram, the spoken utterance SO is outputted overlapping with the utterance section OP-1 or the like of the audible content AC. This makes the spoken utterance SO difficult for a user to perceive.

Meanwhile, the lower portion of FIG. 9 illustrates an example in which the audible content VC is reproduced and the spoken utterance SO is outputted in a case where the output control apparatus 20 according to the present embodiment performs the extension control of a non-utterance section. The output control unit 220 according to the present embodiment may then extend the non-utterance section NOP-1 by using the reproduction information relating to the non-utterance section NOP-1 extracted from the audible content AC. In other words, the output control unit 220 according to the present embodiment is able to extend the non-utterance section NOP-1 by using a background sound and a pause extracted from the audible content AC. In this way, the reproduction information according to the present embodiment may include a silent section. The above-described function of the output control unit 220 according to the present embodiment makes it possible to cause the spoken utterance SO to be more naturally outputted without making a strange impression, while maintaining an output for the audible content AC.

### <<1.7. Flow of Processing>>

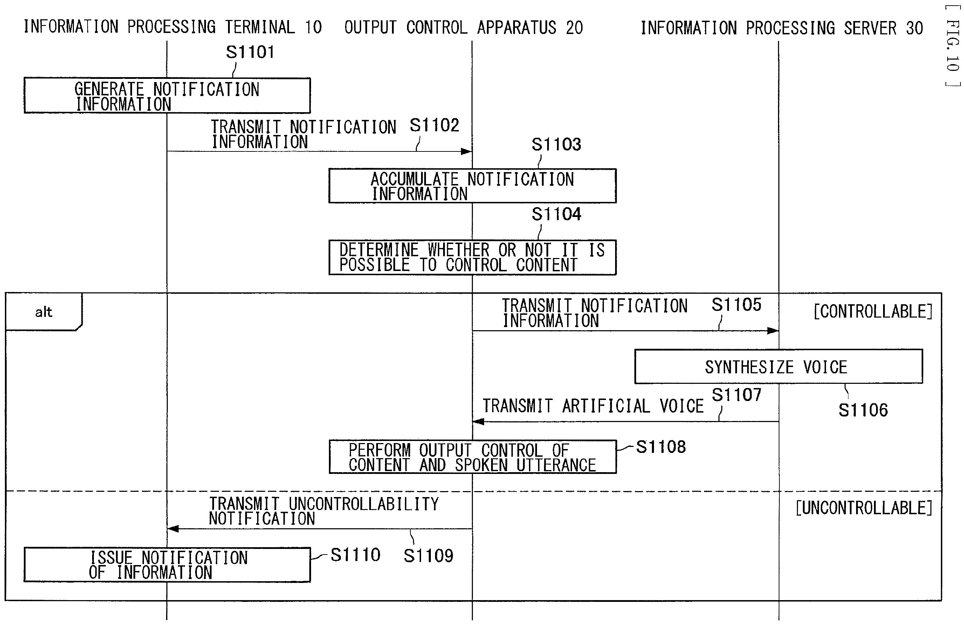

Next, the flow of the information processing method according to the present embodiment is described in detail. FIG. 10 is a sequence diagram illustrating the flow of processing performed by the information processing system according to the present embodiment.

FIG. 10 illustrates that the information processing terminal 10 first generates notification information (S1101), and transmits the notification information to the output control apparatus 20 (S1102). Note that, in a case where the output control unit 220 makes a spoken utterance on the basis of information other than the notification information, the processes of steps S1101 and S1102 may be omitted.

Next, the output control apparatus 20 accumulates the notification information received in step S1102 (S1103). As described above, the output control apparatus 20 according to the present embodiment is able to receive respective pieces of notification information from the plurality of information processing terminals 10, and control the output of a spoken utterance based on the pieces of notification information.

Next, the output control apparatus 20 determines, on the basis of the accumulated notification information or the like, whether or not it is possible to control content (S1104). Specifically, the output control apparatus 20 may determine whether or not there is a non-utterance section that is extendable to allow a spoken utterance to be outputted.

In a case where it is determined in step S1104 that it is possible to control content, the output control apparatus 20 transmits notification information to the information processing server 30 (S1105). Next, the information processing server 30 synthesizes a voice on the basis of the notification information received in step S1105 (S1106), and transmits the synthesized artificial voice to the output control apparatus 20 (S1107). Note that the information processing server 30 may also synthesize a voice on the basis of the relevant information of the content as described above. The output control apparatus 20 then makes a spoken utterance and performs the output control of the content by using the artificial voice received in step S1107 (S1108).

Meanwhile, in a case where it is determined in step S1104 that it is difficult to control content, the output control apparatus 20 may transmit an uncontrollability notification to the information processing terminal 10 (S1109). In this case, the information processing terminal 10 may issue an information notification according to the characteristics of the apparatus on the basis of the uncontrollability notification received in step S1109.

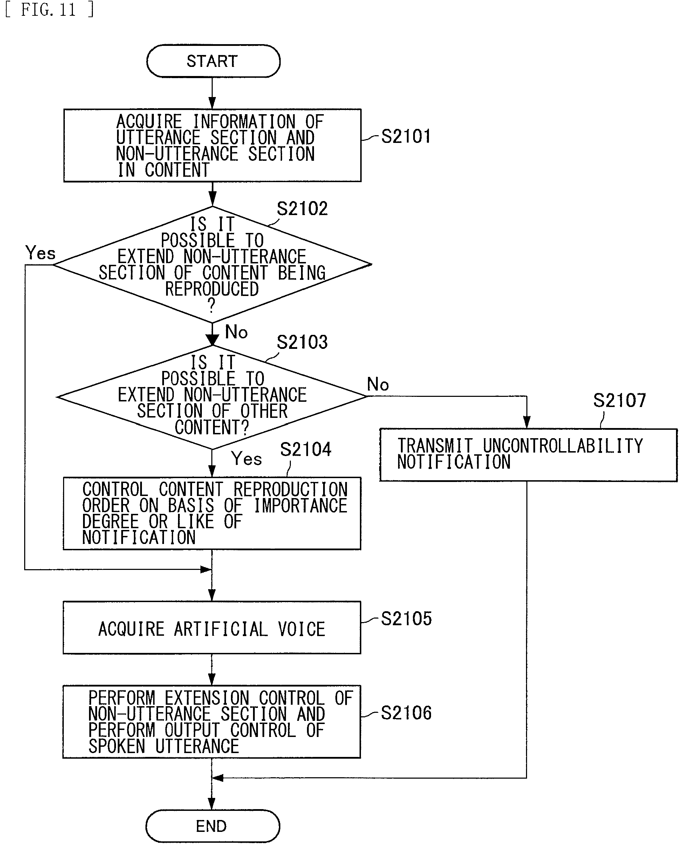

Next, the flow of processing performed by the output control apparatus 20 according to the present embodiment is described in more detail. FIG. 11 is a flowchart illustrating the flow of processing performed by the output control apparatus 20 according to the present embodiment.

FIG. 11 illustrates that the analyzer 210 first analyzes information of an utterance section and a non-utterance section in content (S2101). Note that the analysis process of step S2101 may be performed in advance, or may be performed in real time on the content being reproduced. In addition, the information relating to an utterance section and a non-utterance section may be held in advance in the content information DB 320 of the information processing server 30.

Next, the output control unit 220 determines whether or not a non-utterance section in the content being reproduced is extendable (S2102). In a case where it is determined here that it is difficult to extend a non-utterance section in the content being reproduced (S2102: No), the output control unit 220 then determines whether or not a non-utterance section of other content is extendable (S2103). Here, the other content described above may be, for example, content scheduled to be reproduced after the content being reproduced ends. In other words, the output control unit 220 according to the present embodiment controls the consecutive reproduction of a plurality of pieces of content. In a case where content being reproduced has no non-utterance section that is extendable, the output control unit 220 according to the present embodiment is able to extend a non-utterance section in other content scheduled to be reproduced, and cause a spoken utterance to be outputted during the reproduction of the non-utterance section.

In a case where the output control unit 220 determines here that it is difficult to extend a non-utterance section in the other content (S2103: No), the communication unit 250 transmits an uncontrollability notification to the information processing terminal 10 (S2107).

In contrast, in a case where it is determined that a non-utterance section in the other content is extendable (S2103: Yes), the output control unit 220 executes control regarding the reproduction order of content (S2104). The output control unit 220 may then control the reproduction order of content, for example, on the basis of the importance degree of a spoken utterance. More specifically, in a case where a spoken utterance has a high importance degree, or the like, the output control unit 220 may move up the reproduction order of content including a non-utterance section adapted to the output of the spoken utterance, thereby performing control to allow a spoken utterance having a higher importance degree to be outputted earlier.

In addition, the output control unit 220 may control the reproduction order of content on the basis of the characteristics of a spoken utterance. The output control unit 220 is able to move up the reproduction order of content that matches, for example, the contents of a spoken utterance more, and cause the spoken utterance to be outputted in a non-utterance section of the content. More specifically, for example, in a case where the contents of a spoken utterance pertain to a positive topic, the output control unit 220 is able to perform control such as moving up the reproduction order of music content with a cheerful music tone, and causing the spoken utterance to be outputted in a non-utterance section of the music content.

After the control of reproduction order in step S2104 is completed, or in a case where it is determined in step S2102 that a non-utterance section of the content being reproduced is extendable, the output control unit 220 acquires an artificial voice from the information processing server 30 (S2105).

The output control unit 220 then executes the output control of a spoken utterance and the extension control of a non-utterance section by using the artificial voice acquired in step S2105 (S2106).

### <2. Example of Hardware Configuration>

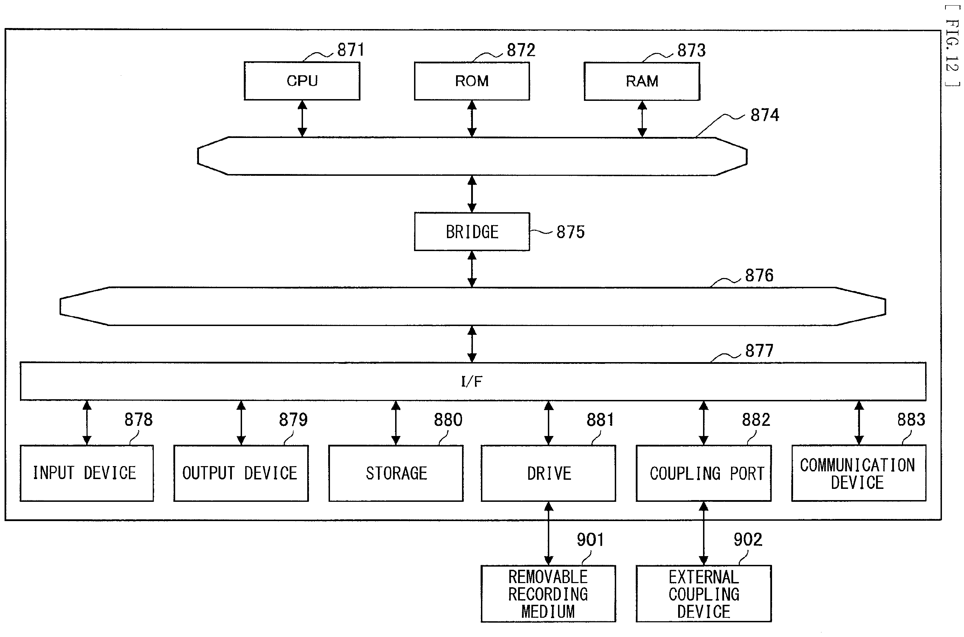

Next, an example of the hardware configuration common to the information processing terminal 10, output control apparatus 20, and information processing server 30 according to an embodiment of the present disclosure is described. FIG. 12 is a block diagram illustrating an example of the hardware configurations of the information processing terminal 10, output control apparatus 20, and information processing server 30 according to an embodiment of the present disclosure. FIG. 12 illustrates that the information processing terminal 10, the output control apparatus 20, and the information processing server 30 each includes, for example, a CPU 871, a ROM 872, a RAM 873, a host bus 874, a bridge 875, an external bus 876, an interface 877, an input device 878, an output device 879, a storage 880, a drive 881, a coupling port 882, and a communication device 883. Note that the hardware configuration illustrated here is an example, and a portion of the components may be omitted. In addition, a component other than the components illustrated here may be further included.

### (CPU 871)

The CPU 871 functions as, for example, an arithmetic processing device or a control device, and controls all or a portion of the operations of each component on the basis of various programs recorded in the ROM 872, the RAM 873, the storage 880, or a removable recording medium 901.

### (ROM 872 and RAM 873)

The ROM 872 is a means for storing a program to be read by the CPU 871, data to be used for operation, or the like. The RAM 873 temporarily or permanently stores, for example, a program to be read by the CPU 871, various parameters appropriately changing in executing the program, or the like.

### (Host Bus 874, Bridge 875, External Bus 876, and Interface 877)

The CPU 871, the ROM 872, and the RAM 873 are coupled to each other, for example, via the host bus 874 that is able to transmit data at high speed. Meanwhile, the host bus 874 is coupled to the external bus 876 having a relatively low data transmission rate, for example, via the bridge 875. In addition, the external bus 876 is coupled to various components via the interface 877.

### (Input Device 878)

For example, a mouse, a keyboard, a touch panel, a button, a switch, a lever, and the like are used for the input device 878. Further, as the input device 878, a remote controller (referred to as remote control below) is sometimes used that is able to transmit a control signal by using infrared rays or other radio waves. In addition, the input device 878 includes a voice input device such as a microphone.

### (Output Device 879)

The output device 879 is a device that is able to visually or aurally notify a user of acquired information. Examples of the device include a display device such as a CRT (Cathode Ray Tube), an LCD, or an organic EL, an audio output device such as a speaker or a headphone, a printer, a mobile phone, a facsimile, and the like. In addition, the output device 879 according to the present disclosure includes various vibration devices that are able to output tactile stimulation.

### (Storage 880)

The storage 880 is a device for storing various kinds of data. As the storage 880, for example, a magnetic storage device such as a hard disk drive (HDD), a semiconductor storage device, an optical storage device, a magneto-optical storage device, or the like is used.

### (Drive 881)

The drive 881 is, for example, a device that reads out information recorded in the removable recording medium 901 such as a magnetic disk, an optical disc, a magneto-optical disk, or a semiconductor memory, or writes information to the removable recording medium 901.

### (Removable Recording Medium 901)

The removable recording medium 901 includes, for example, a DVD medium, a Blu-ray (registered trademark) medium, an HD DVD medium, various semiconductor storage media, and the like. Needless to say, the removable recording medium 901 may be, for example, an IC card, an electronic device, or the like each of which is mounted with a contactless IC chip.

### (Coupling Port 882)

The coupling port 882 is, for example, a port for coupling an external coupling device 902 such as a USB (Universal Serial Bus) port, an IEEE 1394 port, SCSI (Small Computer System Interface), an RS-232C port, or an optical audio terminal.

### (External Coupling Device 902)

The external coupling device 902 is, for example, a printer, a portable music player, a digital camera, a digital video camera, an IC recorder, or the like.

### (Communication Device 883)

The communication device 883 is a communication device for coupling to a network. The communication device 883 is, for example, a communication card for wired or wireless LAN, Bluetooth (registered trademark), or WUSB (Wireless USB), a router for optical communication, a router for ADSL (Asymmetric Digital Subscriber Line), a modem for various kinds of communication, or the like.

### <3. Summary>

As described above, the output control apparatus 20 according to an embodiment of the present disclosure is able to extend a non-utterance section in content, and cause a spoken utterance to be outputted in the extended non-utterance section. According to the configuration, it is possible to more reliably allow a user to perceive the contents of an information notification issued through a spoken utterance even during the reproduction of content including an utterance, while maintaining the completeness of the information notification.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

In addition, the respective steps for the processes of the output control apparatus 20 in this specification are not necessarily performed in chronological order in accordance with the order illustrated in the flowcharts. For example, the respective steps for the processes of the output control apparatus 20 may be performed in order different from the order illustrated in the flowcharts, or may also be performed in parallel.

### Reference Numerals List

10 information processing terminal
110 notification generator
120 communication unit
20 output control apparatus
210 analyzer
220 output control unit
230 content reproduction unit
240 voice output unit
250 communication unit
30 information processing server
310 voice synthesizer
320 content information DB

## Claims

1. An information processing apparatus comprising
an output control unit (220) configured to control an output of a spoken utterance during reproduction of content including an utterance section,
the output control unit (220) being configured to extend a non-utterance section in the content, and cause the spoken utterance to be outputted during reproduction of the extended non-utterance section;
wherein the output control unit (220) is further configured to control consecutive reproduction of a plurality of pieces of the content, and in a case where the content being reproduced does not have the non-utterance section that is extendable, to extend the non-utterance section in another piece of the content scheduled to be reproduced, and to cause the spoken utterance to be outputted during reproduction of the non-utterance section; and
wherein the output control unit (220) is further configured to control a reproduction order of a plurality of pieces of the content on a basis of a characteristic of the spoken utterance.

2. The information processing apparatus according to claim 1, wherein the output control unit (220) is further configured to extend the non-utterance section on a basis of a detail of the content.

3. The information processing apparatus according to claim 2, wherein the output control unit (220) is further configured to extend the non-utterance section by using a portion of reproduction information extracted from the content, and/or
wherein the output control unit (220) is further configured to extend the non-utterance section by using relevant information related to the detail of the content, and/or
wherein the output control unit (220) is further configured to determine, on a basis of time it takes to make the output of the spoken utterance, how long the non-utterance section is extended.

4. The information processing apparatus according to claim 1, wherein the output control unit (220) is further configured to move up the reproduction order of the content including the non-utterance section adapted to the output of the spoken utterance on a basis of an importance degree of the spoken utterance.

5. The information processing apparatus according to anyone of the previous claims, wherein the output control unit (220) is further configured to control the output of the spoken utterance on a basis of respective pieces of notification information received from at least one or more terminals (10).

6. The information processing apparatus according to anyone of the previous claims, wherein the content includes music content.

7. The information processing apparatus according to claim 6, wherein
the non-utterance section includes at least one of a prelude, an interlude, or a postlude in the music content, and
the output control unit (220) is further configured to extend the non-utterance section by causing the prelude, the interlude, or the postlude to be repeatedly reproduced.

8. The information processing apparatus according to claim 6 or 7, wherein the output control unit (220) is further configured to control the output of the spoken utterance including basic information or additional information related to the music content.

9. The information processing apparatus according to anyone of the previous claims, wherein the content includes video content.

10. The information processing apparatus according to claim 9, wherein the output control unit (220) is further configured to extend the non-utterance section by using a still image extracted from the video content, and/or
wherein the output control unit (220) is further configured to extend the non-utterance section by using a still image related to a detail of the video content.

11. The information processing apparatus according to anyone of the previous claims, wherein the content includes audible content, and/or
wherein the content includes game content.

12. The information processing apparatus according to anyone of the previous claims, further comprising an analyzer (210) configured to analyze information regarding the utterance section and the non-utterance section in the content, and/or
further comprising a voice output unit (240) configured to output the spoken utterance.

13. An information processing method comprising
controlling, by a processor (220), an output of a spoken utterance during reproduction of content including an utterance section,
the controlling further including extending a non-utterance section in the content, and causing the spoken utterance to be outputted during reproduction of the extended non-utterance section;
wherein the controlling further includes controlling consecutive reproduction of a plurality of pieces of the content, and in a case where the content being reproduced does not have the non-utterance section that is extendable, extending the non-utterance section in another piece of the content scheduled to be reproduced, and causing the spoken utterance to be outputted during reproduction of the non-utterance section; and
wherein the controlling further includes controlling a reproduction order of a plurality of pieces of the content on a basis of a characteristic of the spoken utterance.

## Patentansprüche

1. Informationsverarbeitungsvorrichtung umfassend eine Ausgabesteuereinheit (220), die dazu ausgelegt ist, eine Ausgabe einer gesprochenen Äußerung während der Wiedergabe eines Inhalts zu steuern, der einen Äußerungsabschnitt beinhaltet,
wobei die Ausgabesteuereinheit (220) dazu ausgelegt ist, einen Nicht-Äußerungsabschnitt in dem Inhalt zu erweitern und zu bewirken, dass die gesprochene Äußerung während der Wiedergabe des erweiterten Nicht-Äußerungsabschnitts ausgegeben wird:
wobei die Ausgabesteuereinheit (220) ferner dazu ausgelegt ist, die aufeinanderfolgende Wiedergabe mehrerer Teile des Inhalts zu steuern und in einem Fall, in dem der wiederzugebende Inhalt nicht den erweiterbaren Nicht-Äußerungsabschnitt aufweist, den Nicht-Äußerungsabschnitt in einem anderen Teil des Inhalts zu erweitern, dessen Wiedergabe geplant ist, und zu bewirken, dass die gesprochene Äußerung während der Wiedergabe des Nicht-Äußerungsabschnitts ausgegeben wird; und
wobei die Ausgabesteuereinheit (220) ferner dazu ausgelegt ist, eine Wiedergabereihenfolge von mehreren Teilen des Inhalts auf der Grundlage einer Eigenschaft der gesprochenen Äußerung zu steuern.

2. Informationsverarbeitungsvorrichtung nach Anspruch 1, wobei die Ausgabesteuereinheit (220) ferner dazu ausgelegt ist, den Nicht-Äußerungsabschnitt auf der Grundlage eines Inhaltsdetails zu erweitern.

3. Informationsverarbeitungsvorrichtung nach Anspruch 2, wobei die Ausgabesteuereinheit (220) ferner dazu ausgelegt ist, den Nicht-Äußerungsabschnitt unter Verwendung eines Teils der aus dem Inhalt extrahierten Wiedergabeinformationen zu erweitern und/oder wobei die Ausgabesteuereinheit (220) ferner dazu ausgelegt ist, den Nicht-Äußerungsabschnitt unter Verwendung relevanter Informationen, die sich auf die Details des Inhalts beziehen, zu erweitern und/oder wobei die Ausgabesteuereinheit (220) ferner dazu ausgelegt ist, auf der Grundlage der Zeit, die für die Ausgabe der gesprochenen Äußerung benötigt wird, zu bestimmen, wie lange der Nicht-Äußerungsabschnitt erweitert wird.

4. Informationsverarbeitungsvorrichtung nach Anspruch 1, wobei die Ausgabesteuereinheit (220) ferner dazu ausgelegt ist, die Wiedergabereihenfolge des Inhalts, der den auf die Ausgabe der gesprochenen Äußerung angepassten Nicht-Äußerungsabschnitts auf der Grundlage eines Wichtigkeitsgrads der gesprochenen Äußerung beinhaltet, nach oben zu verschieben.

5. Informationsverarbeitungsvorrichtung nach einem der vorhergehenden Ansprüche, wobei die Ausgabesteuereinheit (220) ferner dazu ausgelegt ist, die Ausgabe der gesprochenen Äußerung auf der Grundlage jeweiliger Teile der Benachrichtigungsinformationen zu steuern, die von mindestens einem oder mehreren Endgeräten (10) empfangen werden.

6. Informationsverarbeitungsvorrichtung nach einem der vorhergehenden Ansprüche, wobei der Inhalt Musikinhalt beinhaltet.

7. Informationsverarbeitungsvorrichtung nach Anspruch 6, wobei
der Nicht-Äußerungsabschnitt ein Vorspiel und/oder ein Zwischenspiel und/oder ein Nachspiel im Musikinhalt beinhaltet und
die Ausgabesteuereinheit (220) ferner dazu ausgelegt ist, den Nicht-Äußerungsabschnitt durch Bewirken, dass das Vorspiel, das Zwischenspiel oder das Nachspiel wiederholt wiedergegeben wird, zu erweitern.

8. Informationsverarbeitungsvorrichtung nach Anspruch 6 oder 7, wobei die Ausgabesteuereinheit (220) ferner dazu ausgelegt ist, die Ausgabe der gesprochenen Äußerung zu steuern, die grundlegende Informationen oder zusätzliche Informationen in Bezug auf den Musikinhalt beinhaltet.

9. Informationsverarbeitungsvorrichtung nach einem der vorhergehenden Ansprüche, wobei der Inhalt Videoinhalt beinhaltet.

10. Informationsverarbeitungsvorrichtung nach Anspruch 9, wobei die Ausgabesteuereinheit (220) ferner dazu ausgelegt ist, den Nicht-Äußerungsabschnitt unter Verwendung eines aus dem Videoinhalt extrahierten Standbildes zu erweitern, und/oder
wobei die Ausgabesteuereinheit (220) ferner dazu ausgelegt ist, den Nicht-Äußerungsabschnitt unter Verwendung eines Standbildes zu erweitern, das sich auf ein Detail des Videoinhalts bezieht.

11. Informationsverarbeitungsvorrichtung nach einem der vorhergehenden Ansprüche, wobei der Inhalt einen hörbaren Inhalt beinhaltet, und/oder
wobei der Inhalt Spielinhalte beinhaltet.

12. Informationsverarbeitungsvorrichtung nach einem der vorhergehenden Ansprüche, die ferner einen Analysator (210) umfasst, der dazu ausgelegt ist, Informationen bezüglich des Äußerungsabschnitts und des Nicht-Äußerungsabschnitts im Inhalt zu analysieren, und/oder ferner eine Sprachausgabeeinheit (240) umfasst, die dazu ausgelegt ist, die gesprochene Äußerung auszugeben.

13. Informationsverarbeitungsverfahren, umfassend Steuern, durch einen Prozessor (220), einer Ausgabe einer gesprochenen Äußerung während der Wiedergabe von Inhalten, die einen Äußerungsabschnitt beinhalten,
das Steuern ferner das Erweitern eines Nicht-Äußerungsabschnitts in dem Inhalt beinhaltet und bewirkt, dass die gesprochene Äußerung während der Wiedergabe des erweiterten Nicht-Äußerungsabschnitts ausgegeben wird:
wobei das Steuern ferner das Steuern der aufeinanderfolgenden Wiedergabe mehrerer Teile des Inhalts beinhaltet, und in einem Fall, in dem der wiederzugebende Inhalt nicht den erweiterbaren Nicht-Äußerungsabschnitt aufweist, Erweitern des Nicht-Äußerungsabschnitts in einem anderen Teil des Inhalts, der für die Wiedergabe geplant ist, und bewirken, dass die gesprochene Äußerung während der Wiedergabe des Nicht-Äußerungsabschnitts ausgegeben wird; und
wobei das Steuern ferner das Steuern einer Wiedergabereihenfolge von mehreren Teilen des Inhalts auf der Grundlage einer Eigenschaft der gesprochenen Äußerung beinhaltet.

## Revendications

1. Appareil de traitement d'informations comprenant :
une unité de commande de sortie (220) configurée pour commander une sortie d'une énonciation parlée pendant la reproduction d'un contenu comprenant une section d'énonciation,
l'unité de commande de sortie (220) étant configurée pour étendre une section de non-énonciation dans le contenu et faire en sorte que l'énonciation parlée soit délivrée en sortie pendant la reproduction de la section de non-énonciation étendue ;
où l'unité de commande de sortie (220) est en outre configurée pour commander la reproduction consécutive d'une pluralité de morceaux du contenu et, dans un cas où le contenu reproduit n'a pas la section de non-énonciation qui est extensible, pour étendre la section de non-énonciation dans un autre morceau du contenu programmé pour être reproduit, et pour faire en sorte que l'énonciation parlée soit délivrée en sortie pendant la reproduction de la section de non-énonciation ; et
où l'unité de commande de sortie (220) est en outre configurée pour commander un ordre de reproduction d'une pluralité d'éléments du contenu sur la base d'une caractéristique de l'énonciation parlée.

2. Appareil de traitement d'informations selon la revendication 1, dans lequel l'unité de commande de sortie (220) est en outre configurée pour étendre la section de non-énonciation sur la base d'un détail du contenu.

3. Appareil de traitement d'informations selon la revendication 2, dans lequel l'unité de commande de sortie (220) est en outre configurée pour étendre la section de non-énonciation en utilisant une partie des informations de reproduction extraites du contenu, et/ou dans lequel l'unité de commande de sortie (220) est en outre configurée pour étendre la section de non-énonciation en utilisant des informations pertinentes liées au détail du contenu, et/ou
dans lequel l'unité de commande de sortie (220) est en outre configurée pour déterminer, sur la base du temps qu'il faut pour effectuer la sortie de l'énonciation parlée, sur combien de temps la section de non-énonciation est étendue.

4. Appareil de traitement d'informations selon la revendication 1, dans lequel l'unité de commande de sortie (220) est en outre configurée pour remonter l'ordre de reproduction du contenu comprenant la section de non-énonciation adaptée à la sortie de l'énonciation parlée sur une base d'un degré d'importance de l'énonciation parlée.

5. Appareil de traitement d'informations selon l'une quelconque des revendications précédentes, dans lequel l'unité de commande de sortie (220) est en outre configurée pour commander la sortie de l'énonciation parlée sur la base d'éléments respectifs d'informations de notification reçus d'au moins un ou plusieurs terminaux (10).

6. Appareil de traitement d'informations selon l'une quelconque des revendications précédentes, dans lequel le contenu comprend un contenu musical.

7. Appareil de traitement d'informations selon la revendication 6, dans lequel :
la section de non-énonciation comprend au moins un prélude, un interlude ou un postlude dans le contenu musical, et
l'unité de commande de sortie (220) est en outre configurée pour étendre la section de non-énonciation en faisant en sorte que le prélude, l'interlude ou le postlude soit reproduit de manière répétée.

8. Appareil de traitement d'informations selon la revendication 6 ou la revendication 7, dans lequel l'unité de commande de sortie (220) est en outre configurée pour commander la sortie de l'énonciation parlée comprenant des informations de base ou des informations supplémentaires liées au contenu musical.

9. Appareil de traitement d'informations selon l'une quelconque des revendications précédentes, dans lequel le contenu comprend un contenu vidéo.

10. Appareil de traitement d'informations selon la revendication 9, dans lequel l'unité de commande de sortie (220) est en outre configurée pour étendre la section de non-énonciation en utilisant une image fixe extraite du contenu vidéo, et/ou
dans lequel l'unité de commande de sortie (220) est en outre configurée pour étendre la section de non-énonciation en utilisant une image fixe liée à un détail du contenu vidéo.

11. Appareil de traitement d'informations selon l'une quelconque des revendications précédentes, dans lequel le contenu inclut un contenu audible, et/ou dans lequel le contenu comprend un contenu de jeu.

12. Appareil de traitement d'informations selon l'une quelconque des revendications précédentes, comprenant en outre un analyseur (210) configuré pour analyser des informations concernant la section d'énonciation et la section de non-énonciation dans le contenu, et/ou comprenant en outre une unité de sortie vocale (240) configurée pour délivrer en sortie l'énonciation parlée.

13. Procédé de traitement d'informations comprenant les étapes suivantes :
commander, par un processeur (220), une sortie d'une énonciation parlée pendant la reproduction d'un contenu comprenant une section d'énonciation,
la commande comprenant en outre d'étendre une section de non-énonciation dans le contenu, et d'amener l'énonciation parlée à être délivrée en sortie pendant la reproduction de la section de non-énonciation étendue ;
où la commande comprend en outre de commander la reproduction consécutive d'une pluralité d'éléments du contenu et, dans un cas où le contenu reproduit n'a pas la section de non-énonciation qui est extensible,
d'étendre la section de non-énonciation dans un autre élément du contenu programmé pour être reproduit, et
d'amener l'énonciation parlée à être délivrée en sortie pendant la reproduction de la section de non-énonciation étendue ; et
où la commande comprend en outre de commander un ordre de reproduction d'une pluralité d'éléments de contenu sur la base d'une caractéristique de l'énonciation parlée.
